# EUROPÄISCHE PATENTANMELDUNG

(11) **EP 2 604 370 A1**
(43) Veröffentlichungstag der Anmeldung: **19.06.2013**
(21) Anmeldenummer: 11193985.6
(22) Anmeldetag: 16.12.2011
(51) Int. Cl.: B23D 31/00, B26F 3/00

(54) **Verfahren zur Herstellung einer Dichtung**

(71) Anmelder: Magna Steyr Fahrzeugtechnik AG & Co KG, 8041 Graz (AT)
(72) Erfinder: WENDT, Robert, 8010 Graz (AT)
(74) Vertreter: Rausch, Gabriele

(57) **Zusammenfassung**

Bei einem Verfahren zur Herstellung einer Dichtung, insbesondere einer dynamischen Dichtung für eine Ventilanordnung, mit einem Dichtsitz (5) und einem am Dichtsitz anliegenden Dichtelement (4) werden der Dichtsitz (5) und das Dichtelement (4) durch Bruchtrennen mit einer definierten Bruchstelle (8) aus einem einzigen Werkstück hergestellt.

## Beschreibung

Die Erfindung betrifft ein Verfahren zur Herstellung einer Dichtung, insbesondere einer dynamischen Dichtung für eine Ventilanordnung und eine danach hergestellte Dichtung.

Dichtungen mit einem Dichtsitz und einem Dichtelement werden im Allgemeinen aus zwei Werkstücken gefertigt. Mit herkömmlichen Fertigungsverfahren kann aufgrund von Oberflächentoleranzen ein Formschluss zwischen zwei Werkstücken, im vorliegenden Falle zwischen Dichtsitz und Dichtelement, zum Erreichen einer guten Dichtheit nur mit großem Aufwand gewährleistet werden.

Der vorliegenden Erfindung liegt die Aufgabe zu Grunde, ein Herstellungsverfahren für eine Dichtung mit einem Dichtsitz und einem Dichtelement zu schaffen, durch das auf relativ einfache Weise eine sehr hohe Passgenauigkeit durch einen Formschluss und damit eine hohe Dichtwirkung erreicht wird.

Erfindungsgemäß wird diese Aufgabe durch das in Anspruch 1 genannte Verfahren gelöst.

Durch die vollständig neuartige Herstellung einer Dichtung mit einem Dichtsitz und einem Dichtelement aus einem einzigen Werkstück und der erfindungsgemäßen Bruchtrennung passen die beiden Dichtungsteile anschließend im Betrieb exakt zueinander, wodurch eine sehr hohe Dichtheit erreicht wird.

Eine Teilung von Werkstücken durch Bruchtrennen ist zwar grundsätzlich bereits bekannt, aber diese Verfahren beziehen sich auf andere technische Gebiete und zum Teil betreffen sie auch andere Zwecke. Hierzu wird beispielsweise auf die DE 10 2007 022 653 A1 verwiesen, in der ein Bruchtrennverfahren für eine Pleuelstange vorgeschlagen wird.

In der DE 10 2005 031 335 A1 ist ein Verfahren zum Bruchtrennen eines Werkstückes in einen Lagerdeckel und einen Lagerboden beschrieben.

Aus der DE 10 2007 008 584 B3 ist ein Gelenklager mit einem Kunststoffaußenring und ein Verfahren zu dessen Herstellung bekannt, wobei der Außenring mit einer Trennfuge versehen ist.

In einer vorteilhaften Ausgestaltung der vorliegenden Erfindung ist vorgesehen, dass die Bruchstelle zwischen dem Dichtsitz und dem Dichtelement durch Einformen wenigstens einer Kerbe definiert wird.

Um eine vorgesehene bzw. vorbestimmte Trennstelle genau einzuhalten, werden entsprechend ein oder mehrere über den Umfang verteilt angeordnete Kerben an der vorgesehenen Trennstelle des Werkstückes eingeformt. Dies kann z. B. durch umlaufende Kerben im Außen- und im Innendurchmesser des zu trennenden Werkstücks erfolgen.

Von Vorteil ist es, wenn das Werkstück vor der Bruchtrennung mechanisch endbearbeitet wird.

Durch eine derartige Bearbeitung vor dem Bruchtrennverfahren ist es dann nicht mehr notwendig, anschließend die beiden getrennten Teile nochmals zu bearbeiten, wodurch keine nachteiligen Formänderungen auftreten können.

Der eigentliche Trennvorgang kann in einer weiteren Ausgestaltung der Erfindung dadurch erreicht werden, dass zum Bruchtrennen entgegengesetzte Zugkräfte auf das zu trennende Werkstück aufgebracht werden.

Je nach Ausgestaltung der Dichtung kann eine Trennung auch durch Druckkräfte auf die beiden Teile bewirkt werden.

In besonders vorteilhafter Weise lässt sich die Erfindung bei Verwendung von Kunststoffen als Ausgangswerkstück erreichen. In diesem Falle ist es von Vorteil, insbesondere bei Elastomeren, wenn das Werkstück wenigstens in dem Trennbereich soweit abgekühlt wird, dass sein Temperaturniveau unterhalb der Glasübergangstemperatur liegt. Auf diese Weise wird vermieden, dass es zu einer ungewollten Dehnung in dem Trennbereich kommt. Erfolgt der Bruch nun genau entlang der Trennstelle, die z. B. durch ein oder mehrere Kerben definiert ist, so entsteht an den beiden getrennten Teilen jeweils eine Kontur, die genau zur Kontur des Gegenstückes passt. Werden dann später bei dem vorgesehenen Einsatzfall beide Teile, in diesem Falle Dichtsitz und Dichtelement, unter Aufbringung einer äußeren Druckhaft wieder zusammengefügt, so entsteht eine formschlüssige und damit sehr dichte Verbindung. Anstelle von Kunststoff als Material zur Herstellung der Dichtung sind im Rahmen der Erfindung selbstverständlich auch noch andere Materialien möglich, wie z. B. metallische Materialien.

Dient dabei die Bruchstelle als Verbindungselement für Räume, die mit Gas oder mit Flüssigkeit gefüllt sind, so wird beim Verschließen dieser Verbindung ein hohes Maß an Dichtheit zwischen beiden Räumen bewirkt. Wird dann die Verbindung wieder freigegeben, kann diese gleichzeitig als Drosselspalt dienen, um das Druckniveau des durchströmenden Gases oder der Flüssigkeit auf der Auslassseite gegenüber der Einlassseite zu senken. Dichtungen dieser Art werden als dynamische Dichtungen bezeichnet.

Auf diese Weise bewirkt das erfindungsgemäße Verfahren mit dem daraus hergestellten Dichtsitz und dem Dichtelement sowohl eine hohe Dichtheit im geschlossenen Zustand als auch im Bedarfsfall einer Drosselung bzw. Druckreduzierung des einströmenden Gases.

Als strömende Medien kommen beispielsweise Wasserstoff oder komprimiertes Erdgas (CNG) in Frage.

Nachfolgend ist beispielsweise ein Verfahren zur Herstellung einer Dichtung und eine daraus hergestellte Dichtung beschrieben.

Es zeigt:
- Fig. 1: einen Schnitt durch eine erfindungsgemäße Dichtung, nämlich eine Ventilanordnung, wobei Dichtsitz und Dichtelement aus einem Teil mit einer definierten Trennstelle bzw. Bruchstelle hergestellt sind.
- Fig. 2: ausschnittsweise eine vergrößerte Darstellung der Ventilanordnung im Bereich der Bruchstelle mit eingeformten Kerben.

Die Erfindung ist beispielsweise für eine Ventilanordnung beschrieben, aber selbstverständlich ist sie für alle Einsatzfälle geeignet, wobei Dichtungen mit großer Dichtheit vorgesehen sind.

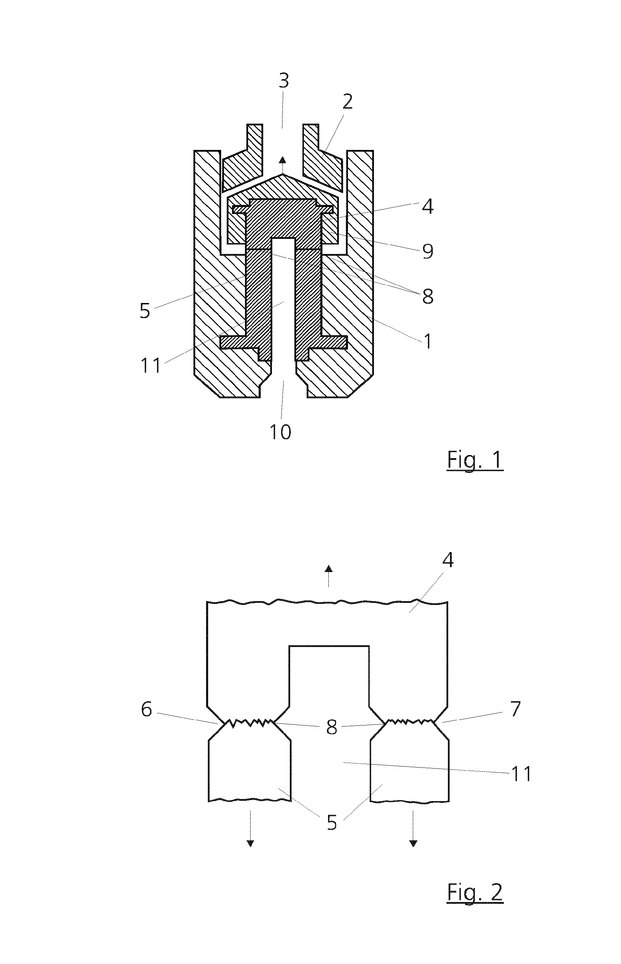

Die in der Fig. 1 dargestellte Ventilanordnung weist ein Gehäuse 1, z. B. aus Metall auf, mit einem ringförmigen Einsatzteil 2 zur Bildung eines Ausgangskanales 3. Innerhalb des Gehäuses 1 und des Einsatzteiles 2 befindet sich ein erstes Kunststoffteil als Dichtelement 4 und ein zweites Kunststoffteil als Dichtsitz bzw. Ventilsitz 5.

Die beiden Kunststoffteile sind aus einem einzigen Werkstück geformt, welches mit einer zentralen in axialer Richtung verlaufenden Bohrung versehen ist, die als Sackbohrung 11 ausgeführt ist. Vor ihrem Einbau in die Ventilanordnung wird das zu trennende Werkstück in seinen äußeren Abmessungen mechanisch endbearbeitet. Dabei wird auch jeweils am Außen- und Innenumfang des Werkstückes eine umlaufende Kerbe 6 bzw. 7 eingeformt (siehe vergrößerte Darstellung in der Fig. 2). Durch die beiden Kerben 6 und 7 wird eine exakte Trenn- bzw. Bruchstelle 8 zwischen dem ersten Kunststoffteil als Dichtelement 4 und dem zweiten Kunststoffteil als Dichtsitz 5 definiert. Wie aus der Fig. 2 ersichtlich ist, wird bei der nach Einformen der Kerben 6 und 7 vorgenommenen Bruchtrennung zwar ein unregelmäßiger Verlauf der Bruchstelle 8 erreicht, aber beim nachträglichen gemeinsamen Einbau in die Ventilanordnung gemäß Fig. 1 liegen die Bruchkanten exakt und damit dichtend aufeinander.

Zur Durchführung des Bruchtrennens kann man an beiden Enden des Werkstückes entgegengesetzt gerichtete hohe Zugkräfte aufbringen, wie dies durch Pfeile in der Fig. 2 dargestellt ist.

Wenn die beiden Kunststoffteile in eine Ventilanordnung nach der Fig. 1 eingebaut werden, so ist es lediglich noch erforderlich, dass das Dichtelement 4, in welchem die Sackbohrung 11 endet, mit einem Führungsteil 9, z. B. aus Metall, versehen wird. Mit einer Verschiebung des Führungsteiles 9 in Pfeilrichtung durch einen nicht näher dargestellten Aktivierungsmechanismus wird ein Abheben des Dichtelementes 4 vom Dichtsitz 5 erreicht, wodurch ein Medienstrom von einem Eingangskanal 10 aus zu dem Ausgangskanal 3 erfolgen kann. Dieser Medienstrom, z. B. Gas, kann auf diese Weise gedrosselt von einem hohen Eingangsdruck aus gegenüber einem niedrigeren Ausgangsdruck erfolgen. Die Erfindung ist selbstverständlich nicht auf ein Werkstück aus Kunststoff beschränkt, das in zwei Teile durch das erfindungsgemäße Bruchtrennen aufgeteilt wird, sondern sie ist auch für andere Materialien, wie z. B. einem Werkstück aus Metall, geeignet.

Mit einem Dichtelement der beschriebenen Art können auch Druckregler realisiert werden, z. B. durch magnetische Betätigung (Regelung der Bewegung) des Dichtelementes 4 bzw. zur kontinuierlichen Regelung des Ausgangsdruckes.

### Bezugszeichenliste

- 1: Gehäuse
- 2: Einsatzteil
- 3: Ausgangskanal
- 4: Dichtelement
- 5: Ventilsitz/Dichtsitz
- 6: Kerbe
- 7: Kerbe
- 8: Bruchstelle
- 9: Führungsteil
- 10: Eingangskanal

## Patentansprüche

1. Verfahren zur Herstellung einer Dichtung, insbesondere einer dynamischen Dichtung für eine Ventilanordnung, mit einem Dichtsitz (5) und einem am Dichtsitz (5) anliegenden Dichtelement (4), wobei der Dichtsitz (5) und das Dichtelement (4) durch Bruchtrennen mit einer definierten Bruchstelle (8) aus einem einzigen Werkstück hergestellt werden.

2. Verfahren nach Anspruch 1,
**dadurch gekennzeichnet, dass** die Bruchstelle (8) in dem zu trennenden Werkstück für den Dichtsitz (5) und für das Dichtelement (4) durch Einformen wenigstens einer Kerbe (6,7) in das Werkstück definiert wird.

3. Verfahren nach Anspruch 2,
**dadurch gekennzeichnet, dass** jeweils eine umlaufende Kerbe (6,7) in den Innendurchmesser und den Außendurchmesser des zu trennenden Werkstücks eingeformt wird.

4. Verfahren nach einem der Ansprüche 1 bis 3,
**dadurch gekennzeichnet, dass** das zu trennende Werkstück für den Dichtsitz (5) und für das Dichtelement (4) vor der Bruchtrennung mechanisch endbearbeitet wird.

5. Verfahren nach einem der Ansprüche 1 bis 4,
**dadurch gekennzeichnet, dass** zum Bruchtrennen entgegengesetzt wirkende Zugkräfte auf das zu trennende Werkstück aufgebracht werden.

6. Verfahren nach einem der Ansprüche 1 bis 5,
**dadurch gekennzeichnet, dass** als Material für das zu trennende Werkstück Kunststoff verwendet wird.

7. Verfahren nach Anspruch 6,
**dadurch gekennzeichnet, dass** das zu trennende Werkstück zum Bruchtrennen auf ein Temperaturniveau unterhalb der Glasübergangstemperatur wenigstens im Bereich der Trennstelle (8) abgekühlt wird.

8. Dichtung nach einem der Ansprüche 1 bis 7,
**gekennzeichnet durch** eine Bruchstelle (8) zwischen dem Dichtsitz (5) und dem Dichtelement (4).

9. Dichtung, insbesondere dynamische Dichtung für eine Ventilanordnung oder für einen Druckregler, mit einem Dichtsitz (5) und einem am Dichtsitz (5) anliegenden Dichtelement (4), wobei der Dichtsitz (5) und das Dichtelement (4) durch Bruchtrennen mit einer definierten Bruchstelle (8) aus einem einzigen Werkstück hergestellt sind.
